# EUROPEAN PATENT SPECIFICATION

(11) **EP 4 718 373 B1**
(45) Date of publication and mention of the grant of the patent: **04.11.2026**
(21) Application number: 24203433.8
(22) Date of filing: 30.09.2024
(51) Int. Cl.: G06T 7/00

(54) **METHOD, COMPUTING SYSTEM, COMPUTER PROGRAM PRODUCT AND COMPUTER-READABLE MEDIUM FOR DETERMINING BONE MINERAL DENSITY**
VERFAHREN, COMPUTERSYSTEM, COMPUTERPROGRAMMPRODUKT UND COMPUTERLESBARES MEDIUM ZUR BESTIMMUNG DER KNOCHENMINERALDICHTE
PROCÉDÉ, SYSTÈME INFORMATIQUE, PRODUIT PROGRAMME INFORMATIQUE ET SUPPORT LISIBLE PAR ORDINATEUR POUR DÉTERMINER LA DENSITÉ MINÉRALE OSSEUSE

(43) Date of publication of application: 01.04.2026
(73) Proprietor: Bonescreen GmbH, 81671 München (DE)
(72) Inventor: EL HUSSEINI, Malek, 81671 München (DE)
(74) Representative: Laqua, Bernd Christian Kurt

(56) References cited:
- CN-A- 116 433 620
- US-A1- 2008 013 813
- US-B2- 10 736 601
- BRUNNQUELL CHRISTINA L ET AL: "Sources of error in bone mineral density estimates from quantitative CT", EUROPEAN JOURNAL OF RADIOLOGY, ELSEVIER SCIENCE, NL, vol. 144, 15 October 2021 (2021-10-15), XP086872322, ISSN: 0720-048X, [retrieved on 20211015], DOI: 10.1016/J.EJRAD.2021.110001

## Description

### FIELD OF THE INVENTION

The present invention generally relates to a method of determining a bone mineral density (BMD) of a patient, an associated computing system, an associated computer program product and an associated computer readable medium.

### BACKGROUND TO THE INVENTION

Osteoporosis is a systemic, metabolic disease leading to an increased risk of fractures. It is characterized by reduced bone mass and deteriorated bone structure. While structure can only be measured by dedicated devices in peripheral bones, bone mineral density (BMD) can be measured by quantitative x-ray based methods. The two "classic" methods are (1) Dual-Energy-X-ray-Absorptiometry (DEXA) to measure a two-dimensional (areal) BMD and (2) quantitative computed tomography (QCT) to measure a three-dimensional (volumetric) BMD. QCT usually consists of image acquisition, definition of a region of interest of where to measure BMD, extraction of the Hounsfield units (HU) of those regions, determining a calibration equation to convert HU into BMD, and reporting the average BMD.

In these steps, image acquisition is highly standardized, region of interest (ROI) extraction is human-supervised, and calibration is done in a synchronous way, necessitating a calibration phantom (containing several different equivalent density inserts) to be scanned prior to the scanning of the patient (asynchronous calibration) or simultaneously with the scanning of the patient (synchronous calibration). As such a dedicated examination is associated with a high radiation dose, non-dedicated scans (i.e., scans acquired for other purposes than osteoporosis screening) have also been used to measure BMD. In such a case, a phantom is not available in many scenarios and the scan (parameters) is not standardized. To overcome this, the calibration is performed without external phantoms and referred to as "internal calibration". Here, the phantom is mostly replaced by measurements of internal tissue that has a stable density such as air, blood, or fat. In that case, the calibration equation is derived from HU-measurements of these tissues, as is seen in US 10736601 B2.

One additional calibration step can also involve the usage of known scan parameters such as kilovoltage peak (kVp, the energy of the X-ray beam in a particular scan). Other approaches include a rough estimation of specific patient properties, such as the patient circumference, that would correlate with patient-specific absorption, as is seen in KR 101750108 B1 and US 20080013813 A1. These are, in general, less accurate than tissue-specific internal calibration.

A third approach directly refers to learning a HU-to-BMD calibration equation from known associations between QCT (as measured with a phantom) and regular (non-standardized) Computed Tomography (CT), as is seen in KR 101928984 B1 and CN 116433620 A.

A fourth approach involves a direct physical model, as is seen in CN 117297637 A, based on material decomposition theory using a mixture rule. This is also referred to as "self-calibrating" as no reference database is needed. In this, the bone is assumed to be a mixture of hydroxyapatite and water. Other unknown materials are also considered, whose concentration cannot be determined in a patient-specific way but can be estimated from the population based on patient characteristics.

Calibrating CT scans for BMD measurements in osteoporosis assessment encounters numerous challenges due to inherent dependencies on scanner settings, acquisition parameters, and patient-specific factors. Despite CT scanners being calibrated to standard Hounsfield Units (HU) for air (-1000 HU) and water (0 HU), the accuracy of BMD measurements relies heavily on appropriate calibration procedures tailored to the region of interest. Synchronous calibration, where the calibration phantom is positioned under the patient during scanning, suffers from inaccuracies due to absorption effects like beam hardening and differences in tissue density distribution between the phantom and patient. Particularly at the spine, where patients have a different degree of lordosis, the position of the phantom in relation to the vertebrae will change and introduce changes of image noise, beam hardening, and scatter on HU, affecting the calibration quality.

Asynchronous calibration avoids these problems by considering a phantom that resembles the patient anatomy and performing the calibration at the right region of interest, but cannot take patient-specific effects into account. Additionally, some scanner settings, like table height, may also vary during clinical routine and cannot be accounted for.

Internal calibration attempts to account for such patient-specific factors but is limited in addressing variations introduced by applied contrast material or conditions like edema, which significantly alter tissue densities. Contrast agents used in CT can distort HU readings, particularly affecting muscle, vessels, and fat densities. Currently, there is no internal calibration approach that specifically addresses the influence of contrast material on an internal calibration. Known methods suggest using air and fat as reference tissue in contrast enhanced scans, but fat is not very reliable due to varying amounts of connective tissue enclosed. Both tissue densities are clearly different from the density of trabecular bone, rendering a linear regression more susceptible to errors.

Some known methods suggest comparing synchronous calibration with asynchronous and internal calibration. In a single center study, no substantial differences in overall error were found between asynchronous and internal calibration when adequately correcting for the presence of contrast material, as contrast material had a significant influence on the calculated BMD. Furthermore, beam hardening is not uniform across the scan volume but is dependent on focal variations of tissues and densities within the scan volume. Therefore, artifacts caused by contrast material in the bowels can reduce HU values of adjacent tissues, complicating accurate BMD calibration that is dependent on such focal measurements. Thus, measurements of tissue densities for calibration are usually done manually to visually check for such errors. This contradicts the necessities of an automated calibration for population-based screening.

This underlines that existing internal calibration methods lack interpretability and do not provide means to estimate measurement errors, which are particularly problematic for machine-learning-based approaches. Additionally, most calibrations are optimized for hard tissue (bone), neglecting the trabecular region's composition of bone, fat, and soft tissue. Changes in CT settings (e.g., tube voltage) can alter tissue absorption rates based on the presence and distribution of different chemical elements within that tissue, necessitating adaptable calibration factors for optimal accuracy. In a vertebra, this distribution is known to change with age, however incorporating population-based norm values, as seen in CN 117297637 A for example, contradicts a screening approach, as age-dependent calibration always would put the patient more towards the average population and particularly affect longitudinal analysis. Any calibration should be independent from the target tissue, where the measurement shall be performed, i.e., independent from the trabecular bone in case of the spine or from the cortical bone in case of the hip.

Purely physics-informed models primarily focus on tissue absorption characteristics, overlooking scanner-specific effects like vendor-specific beam hardening correction algorithms. Thus, these models may not adequately account for scanner nuances crucial for precise BMD measurements.

In summary, internal calibration methods face multiple challenges related to patient-specific variations, tissue composition, interpretability, and adaptation to changing scan parameters, underscoring the complexity of achieving accurate BMD assessments in clinical CT imaging for osteoporosis evaluation.

Accordingly, there is a need for a technique that avoids one or more of the problems discussed above, or other problems.

### SUMMARY OF THE INVENTION

The invention is set out in the independent claims. Preferred embodiments of the invention are set out in the dependent claims.

According to a first aspect, we describe a method for determining a bone mineral density (BMD) of a patient, the method being performed by a computing system and comprising: obtaining a computed tomography (CT) scanning image of a region of the patient, the scanning image acquired by a CT scanner using a first known parameter; mapping, by a first artificial intelligence (AI) module, at least one attribute of the obtained scanning image into a space of an ideal CT scanner with known system settings using a first domain adaptation step, wherein the ideal scanner employs a second known parameter, wherein the first known parameter and the second known parameter relate to one another; adjusting, by a second AI module, a BMD of the mapped image to remove patient-specific effects using a second domain adaptation step; delineating a region of interest of a bone of the patient within the adjusted image; and determining a BMD of the delineated region of interest of the bone.

The obtaining of the CT scanning image may comprise obtaining 3D image data processed from a source that is part of, or is coupled to, the computing system, which may comprise a further computer network, or another communication port configured to interact with various image sources, such as imaging databases, imaging computers, or an imaging apparatus. The 3D image data may comprise image intensities with a specific signal dynamic range. The image intensity may be based on a radiocontrast agent that has been injected into the patient and is visible in a CT scanning image. The CT scanning image may, in some examples, be obtained from a CT image acquirer that is part of, or is coupled to, the computing system. The first known parameter may be any suitable parameter of the CT scanner such as, for example, a model of the CT scanner, an acquisition parameter such as, for example, tube current and reconstruction algorithms, of the CT scanner/scanning image, a kilovoltage peak (kVp) setting, or any other suitable parameter.

The mapping, and first AI module, may employ deep learning techniques, specifically multi-to-one domain adaptation, to map the at least one attribute into a space of an ideal CT scanner. The first AI module may as such comprise a neural network. The ideal CT scanner may have at least one set parameter that is constant and known to the user of the method. The ideal scanner may be a thought as a reference CT scanner, e.g., a real or imaginary CT scanner that is taken as a representative (ideal) reference. The ideal CT scanner may as such be an entirely virtually constructed scanner. That is to say, the ideal scanner, if it is an imaginary CT scanner, may not exist in real life, but exists only in a virtual space. In some examples, the ideal CT scanner may be a mono-energetic scanner or a dual-energy scanner. A duel-energy scanner may, in some examples, output one or more mono-energetic images. In some examples, the ideal scanner is a multi-detector scanner with a tube voltage of 120 kVp scanned at a standardized table height, which places the patient at an iso-center of the ideal scanner. In some examples, the ideal scanner uses a soft-tissue kernel. In some examples, a tube voltage of the ideal scanner is 80 kVp or 120 kVp, although the skilled person understands that any suitable tube voltage may be used for the ideal scanner.

The first AI module then maps at least one attribute of the image, preferably a CT density and/or CT intensity of the obtained image, to the space of the ideal CT scanner. The CT density and/or CT intensity may optionally be based on a radiocontrast agent visible within the obtained image. In some contexts of the present disclosure, the terms "CT intensity" and "CT density" can be used interchangeably. The second known parameter is related to the first known parameter. For example, if the first known parameter is a kVp of the CT scanner, the second known parameter is a kVp of the ideal CT scanner. The mapping step may be undertaken by a contrast and intensity mapper that is part of, or is coupled to, the computing system. The first AI module may incorporate specific techniques such as, for example, cycle consistency, adversarial training, and perceptual loss functions in order to improve the first domain adaptation step.

The adjusting, by the second AI module, may further refine the mapped CT image by removing patient-specific effects, such as, for example, beam hardening artifacts, through a secondary domain adaptation step. The second AI module may comprise a neural network, for example. Such effects may, in some examples, be removed by inputting a (e.g., system-calibrated) CT scan/image into the second AI module, which is trained to adjust the calibrated BMD of the calibrated scan/image into a converted BMD. In particular, the calibrated scan/image may be mapped from the BMD space back to the BMD space while adjusting to eliminate residual BMD errors by making use of the local and global context of the image, for example. In some examples, paired CT scans may be leveraged with an external phantom and corresponding calibrated scans (with the phantom cropped out) as a ground truth. The adjusting step may be undertaken by a patient-specific effect adjuster unit that is part of, or is coupled to, the computing system.

The delineation may allow for the effective processing of the adjusted CT image to delineate regions of interest for BMD measurements and calculations. This step may use, for example, dilated convolutions, attention mechanisms, or deeper supervision in order to delineate the region of interest from the wider adjusted CT image. The delineation step may be undertaken by a delineator unit that is part of, or is coupled to, the computing system.

The determination step may enable clinicians to easily assess BMD values at each vertebra location, or within the wider region of interest, facilitating better diagnosis and treatment planning. The determination step may be undertaken by a calculator unit that is part of, or is coupled to, the computing system.

In some examples, the first AI module is trained to perform the mapping based on a plurality of CT scanning images different from the obtained scanning image and their mapping of the at least one attribute into the space of the ideal CT scanner. This may allow for better training of the first AI module, as the module is trained by a large number of different inputs relating to different CT scanner settings, different image positionings, different qualities of images, and so on. This, in turn, may improve the results of inference by the first AI module and lead to a more accurate calculation of the BMD.

In some examples, the first AI module uses a Generative Adversarial Network (GAN) for the first domain adaptation step, wherein the GAN comprises: a generator network configured to transform data of the obtained scanning image from a source domain to a target domain, wherein the source domain is a domain of the CT scanner the obtained scanning image is obtained from, and the target domain is a domain of the ideal CT scanner; and a discriminator network configured to distinguish whether the data is transformed data, or data that originated from the target domain. The generator network may learn to transform CT scans from different source domains into a target domain of the ideal CT scanner, while the discriminator network may learn to distinguish between the transformed CT scans and CT scans that originate form the target domain. The generator network can be based on architectures such as, for example, a U-Net, i.e., a type of (convolutional) neural network configured to be used in the field of biomedical image segmentation, as the skilled person will appreciate. The discriminator network can be a convolutional neural network (CNN) designed to classify whether an input CT scan belongs to the target domain or is a transformed scan from a source domain, but may alternatively be any suitable type of neural network. This may allow for a better calculation and determination of the BMD of the region of interest.

In some examples, the first AI module uses a denoising diffusion model for the first domain adaptation step, wherein the at least one attribute is configured to be progressively transformed from the source domain, comprising the first known parameter, to the target domain, comprising the second known parameter. The skilled person will understand that diffusion models are probabilistic generative models that iteratively refine a noisy input image by learning a denoising process. The first AI module can use a diffusion model that has been input into the module and/or use its training to progressively transform CT scans from source domains into CT scans of the target domain in the inference phase of the AI module. The diffusion model can be based on U-Net architectures using, for example, Denoising Diffusion Probabilistic Models (DDPM). This may allow for a better calculation and determination of the BMD of the region of interest as the images used for the rest of the method are clearer.

In some examples, the first AI module uses a segmentation network for the first domain adaptation step, wherein information relating to a specific anatomical context of each voxel of the plurality of CT scanning images is determined by the segmentation network. The segmentation network may, in some examples, include body composition and/or multi-organ segmentation. This conditioning may allow the first AI module to consider the specific anatomical context of each voxel in the CT scan, leading to more accurate and context-aware domain adaptation. The first AI module can utilize a separate segmentation network, such as, for example, a U-Net or a DeepLab (a type of family of convolutional neural networks known to the skilled person), to generate a full-body segmentation mask, which may then be used as additional input to the generator network in the GAN or the diffusion model mentioned above.

In some examples, the second domain adaptation step comprises mapping the mapped image from a first domain comprising first BMD data to a second domain comprising second BMD data, wherein the second BMD data is the first BMD data without BMD residual errors. This may be achieved by taking into account the local and global context of the mapped image. This allows the second AI module to effectively capture and remove patient-specific effects while preserving the essential details of the mapped CT image. This may be implemented through dilated convolutions and/or multi-scale feature aggregation. As errors are removed, this may lead to a more accurate BMD determination.

In some examples, the second domain adaptation step further comprises utilizing a segmentation mask configured to segment at least one organ of the patient within the obtained scanning image from a remainder of the obtained scanning image. The use of segmentation masks, in particular in relation to important organs, may allow for the domain adaptation process to be guided towards better removal of beam hardening effects. These organs may include, but are not limited to, the liver, kidneys, spleen, lungs, and spine, as their presence and properties can significantly influence the beam hardening artifacts in the mapped and/or adjusted CT image. By incorporating the segmentation masks, the second AI module can better focus on the relevant anatomical regions and more effectively remove patient-specific effects, as well as image features such as the presence of a contrast agent, resulting in a more accurate adjusted CT image and BMD determination.

In some examples, the second AI module uses a foreign material detection module configured to detect a foreign material in the obtained image, in particular metallic material, wherein the second AI module applies a correction to reduce an effect of the detected foreign material on the adjusted/converted BMD of the mapped image. The foreign-material detection module may automatically identify and flag foreign materials, such as screws or other metal implants, which can significantly influence adjacent BMD measurements. Upon detecting metal artifacts, the second AI module may apply appropriate correction techniques to minimize their impact on the BMD measurements. These correction techniques can include, but are not limited to, interpolation from adjacent non-affected regions, metal artifact reduction algorithms, or adjusting the segmentation masks to exclude the affected areas.

In some examples, the determining step further comprises calculating a mean BMD in the delineated region of interest of the bone, in particular a trabecular region of one or more vertebrae, of the patient located in the obtained scanning image. This may allow for the exclusion of anomalies, metastasis or fractured vertebrae, or indeed any bone within the delineated region of interest. These features can be determined by another independent method such as, for example, a neural network located in one of the AI modules mentioned herein, or in a third AI module, be known a-priori, or be determined based on the intensity distribution of the delineated region of interest. The trabecular bone region may be determined by a segmentation module.

In some examples, the method further comprises calibrating the mapped image, before the second domain adaptation step, using a known calibration curve based on the second known parameter. This may allow for verification of consistency with the mapped CT image and/or validating the mapped image against predefined acceptable ranges. The verification and/or validation may be based on known ranges of tissue densities within specific regions of interest. For example, for a 120kVp ideal scanner in the BMD space, fat should ideally have a density of -80 ± 50 HU, and muscle should have ideally a density 30 ±50 HU. This may reduce the possibility of bad data/images being used for the determination of the BMD, thereby improving the determination of the BMD. The calibration step may be undertaken by a CT image calibrator that is part of, or is coupled to, the computing system.

In some examples, the calibration curve is a linear calibration curve which comprises a known calibration slope and intercept based on the second known parameter, wherein, optionally, the computing system uses a database query module and a calibration curve generator, wherein: the database query module is configured to communicate with a calibration database to retrieve a relevant calibration parameter based on the second known parameter; the calibration curve generator is configured to generate the linear calibration curve based on the retrieved calibration parameter; and wherein the calibration step further comprises applying the linear calibration curve to the mapped image and transforming the at least one attribute, preferably at least a CT intensity of the obtained scanning image, into a calibrated BMD value. The calibration step may calibrate the mapped CT image using a linear calibration curve with the known calibration slope and intercept of the ideal scanner using, for example, a database query module and a calibration curve generator. The database query module may interact with a calibration database to retrieve the appropriate calibration parameters for the ideal CT scanner. If available, the query module also may retrieve the calibration parameters based on the CT scanner model and/or an acquisition parameter and/or kVp setting of the CT scanner. Error checks may then performed to ensure the accuracy and integrity of the retrieved parameters, such as verifying consistency with the mapped CT image and validating against predefined acceptable ranges. The ranges may be, for example, known ranges of tissue densities within specific regions of interest. For example, for a 120kVp ideal scanner in the BMD space, fat should ideally have a density of -80 ± 50 HU, and muscle should have ideally a density 30 ±50 HU. The calibration curve generator may generate a linear calibration curve using the retrieved slope and intercept values. This curve may then be applied to the mapped CT image, transforming the CT intensity into calibrated BMD values.

In some examples, the training of the first and/or second AI module may be based on pairs of images obtained from CT scanners, wherein one image is an ideal image calibrated with a synchronous phantom, and the other image is of the same patient obtained from a different scanner with at least one of a different table height, a different contrast administration, and a different tube voltage, for example. This may allow for the first and/or second AI module to be trained accurately for the mapping and adjusting steps described herein, and allow for the AI modules to undertake their respective domain adaptation steps accordingly.

In particular, the first AI module may be trained based on a plurality of CT scanning images different from the obtained scanning image, wherein the plurality of CT scanning images include scans acquired using the ideal scanner as input and corresponding scans acquired using a diverse set of CT scanners different from the ideal scanner as output, wherein the first AI module may be trained to output a CT scanning image as if it were obtained by the ideal CT scanner. Optionally, at least one of the following loss functions may be used in the training:
- an adversarial loss function;
- a cycle consistency loss function;
- a perceptual loss function; and
- a feature alignment and task-specific loss function.

The above may allow for CT scans received from a diverse range of CT scanners to match to conditions of the ideal scanner and/or allow for these received CT scans to match those produced by the ideal scanner. This, in turn, allows for a standardization of the obtained CT scanning images. The use of at least one of the above-mentioned loss functions may allow for the model to generate images that closely resemble those from the target domain, ensure that the mapping between domains is reversible, preserve the semantic content and fine details of the image during translation, and further refine the model's performance.

Further in particular, the second AI module may be trained based on a plurality of CT scanning images different from the obtained scanning image, wherein the plurality of CT scanning images include scans containing phantoms as input and corresponding scans converted into the BMD space with patient-specific effects being removed as output, wherein the second AI module may be trained to output a CT scanning image with an adjusted BMD and patient-specific effects removed. Optionally, at least one of the following loss functions may be used in the training:
- an adversarial loss function;
- a cycle consistency loss function;
- a perceptual loss function;
- a voxel-wise reconstruction loss function;
- a landmark correspondence loss function; and
- a feature matching loss function.

The above may allow for an improved adjustment of the mapped images output by the first AI module, thereby improving BMD measurements. The use of at least one of the above-mentioned loss functions may allow for the model to generate images that closely resemble those from the target domain, ensure that the mapping between domains is reversible, preserve the semantic content and fine details of the image during translation, ensure pixel-level accuracy, ensure spatial consistence between key anatomical features, and preserve high-level structural information across domains.

In some examples, the first AI module may also be trained based on at least one of:
a) models of CT scanners;
b) acquisition parameters of obtained images of CT scanners; and
c) kilovoltage peak, kVp, settings of obtained images of CT scanners; and/or the second AI module may also be trained to eliminate beam hardening effects based on at least one of:
d) contrast material within the obtained images of CT scanners;
e) organs of patients within obtained images of CT scanners; and
f) positions of patients within obtained images of CT scanners.

According to a second aspect, a computing system comprising means for carrying out the method of the first aspect is provided. The computing system may comprise at least one processor and at least one memory, the at least one memory containing instructions executable by the at least one processor such that the computing system is operable to carry out the method according to the first aspect.

According to a third aspect, a computer program product is provided. The computer program product comprises program code portions for performing the method of the first aspect when the computer program product is executed on a computing system (e.g., a computing system as defined above).

According to a fourth aspect, a computer-readable medium having stored thereon the computer program product of the third aspect is provided. The computer-readable medium may be a semiconductor memory, DVD, CD-ROM, and so on.

Any of the aspects above, in addition to their technical effects outlined above, may also provide at least one of the following technical effects, particularly with respect to the conventional techniques of the prior art described earlier above:
- Elimination of the need for an external phantom for calibration;
- Elimination of the need for selecting a reference tissue for calibration of the entire CT scan, enabling multiple, downstream medical applications from one processing step;
- Robustness to the CT scanner's tube voltage, a significant factor affecting the absorption rate of various materials (material/kVp-dependent absorption rates);
- Robustness to patient effects such as size and body composition;
- Robustness to system effects such as the CT scanner's internal calibration, reconstruction kernel, image reconstruction software, and patient positioning including table height;
- Addressing multiple sources errors in the calibration process, including variations in scanner models, acquisition parameters, kVp settings, and patient-specific effects, enables higher individualization and accuracy; and
- Automated foreign material detection that identifies and flags foreign materials, such as screws or metal implants, which can significantly influence adjacent BMD measurements.

It is clear to a person skilled in the art that certain features of the method set forth herein may be implemented under use of hardware circuits, software means, or a combination thereof. Even if some of the aspects described above have been described in reference to the method, these aspects may also apply to an apparatus or computing system configured to carry out the method described herein.

### BRIEF DESCRIPTION OF THE DRAWINGS

The aspects of the invention will now be further described, by way of example only, with reference to the accompanying figures, wherein like reference numerals refer to like parts, in which:
- Figure 1a: shows an exemplary composition of a computing system for determining a BMD of a patient according to example implementations as described herein;
- Figure 1b: shows a block diagram illustrating a modular composition of a computing system for determining a BMD of a patient according to example implementations as described herein;
- Figure 2: shows a flow chart of training a first AI module, mapping at least one attribute of the obtained scanning image and calibrating the mapped image according to example implementations as described herein;
- Figure 3: shows a flow chart of training a second AI module and adjusting a BMD of the mapped image according to example implementations as described herein; and
- Figure 4: shows a flow chart of a method for determining a BMD of a patient according to example implementations as described herein.

### DETAILED DESCRIPTION OF EMBODIMENTS

In the following description, for purposes of explanation and not limitation, specific details are set forth in order to provide a thorough understanding of the present disclosure. It will be apparent to one skilled in the art that the present disclosure may be practiced in other embodiments that depart from these specific details.

Those skilled in the art will further appreciate that the steps, services and functions explained herein below may be implemented using individual hardware circuitry, using software functioning in conjunction with a programmed micro-processor or general purpose computer. It will also be appreciated that when the present disclosure is described in terms of a method, it may also be embodied in one or more processors and one or more memories coupled to the one or more processors, wherein the one or more memories are encoded with one or more programs that perform the steps, services and functions disclosed herein when executed by the one or more processors.

Domain adaptation in medical imaging, as described and used herein, is a technique primarily used to address challenges that arise due to the variability in data distributions across different imaging devices, protocols, or institutions. It generally aims to transfer knowledge from a source domain (e.g., hospital A) to a target domain (e.g., hospital B).

Additionally or alternatively, the domains may be different scanners in the same hospital/facility, or differences between different scans in the same scanner. One motive is to enable the generalization of algorithms designed for one domain to generalize on the second.

Domain adaptation can be categorized into paired and unpaired approaches. Paired approaches assume the availability of corresponding images in both source and target domains, often achieved through image registration techniques, e.g., registered images of MR and CT from the same patient. On the other hand, unpaired approaches do not require such correspondences, making them more flexible and widely applicable. Either approach may be compatible with the aspects and embodiments described herein. In particular, the first AI module as described herein may use an unpaired approach and the second AI module as described herein may use a paired approach, as will be described further below.

The process of domain adaptation typically involves minimizing various types of losses to align the feature distributions of the source and target domains. These losses can be broadly classified into adversarial losses, reconstruction losses, and consistency losses. Adversarial losses, often used in Generative Adversarial Networks (GANs), encourage the generation of target-like images from the source domain. Reconstruction losses ensure that the transformed images retain the original content, while consistency losses enforce that the predictions remain consistent before and after the domain transformation.

Several factors can affect the accuracy of bone mineral density (BMD) measurements during the calibration process. These factors can be broadly categorized into two main categories: system-related factors and patient-related factors.
1. Scanner-related factors:
   ∘ CT scanner model and manufacturer: Different CT scanners may use different internal calibrations, kernels and software for image reconstruction and the like.
   ∘ Scan acquisition parameters: Factors such as tube voltage (kVp), tube current (mA), and reconstruction algorithms can influence the accuracy of BMD measurements.
   ∘ Scanner drift: Over time, the performance of a CT scanner may change due to factors like aging components like the x-ray tube or software updates.
2. Patient-related factors:
   ∘ Patient positioning: Misalignment or off-center positioning can lead to errors in BMD estimation.
   ∘ Patient size and body composition: The size and body composition of the patient can affect the accuracy of BMD measurements, as larger patients, or those with a higher proportion of soft tissue may require different calibration factors.
   ∘ Contrast-related artifacts: Presence of a contrast agent in the CT scan can introduce artifacts that may affect the accuracy of BMD measurements.

The invention, as described herein, attempts to reduce the effects of one or more of the above factors on the BMD measurement. The skilled person will understand that the reduction of the effects of these factors leads to a more accurate determination of BMD.

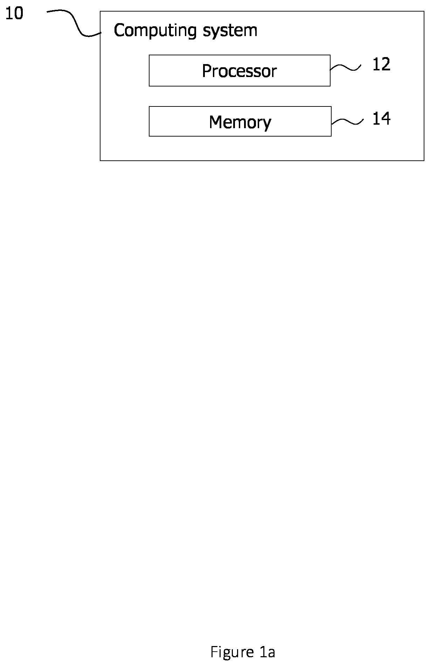

Figure 1a illustrates an exemplary composition of a computing system 10 for determining a BMD of a patient as described herein. The computing system 10 comprises at least one processor 12 and at least one memory 14, wherein the at least one memory 14 contains instructions executable by the at least one processor 12 such that the computing unit 10 is operable to carry out the method steps described herein.

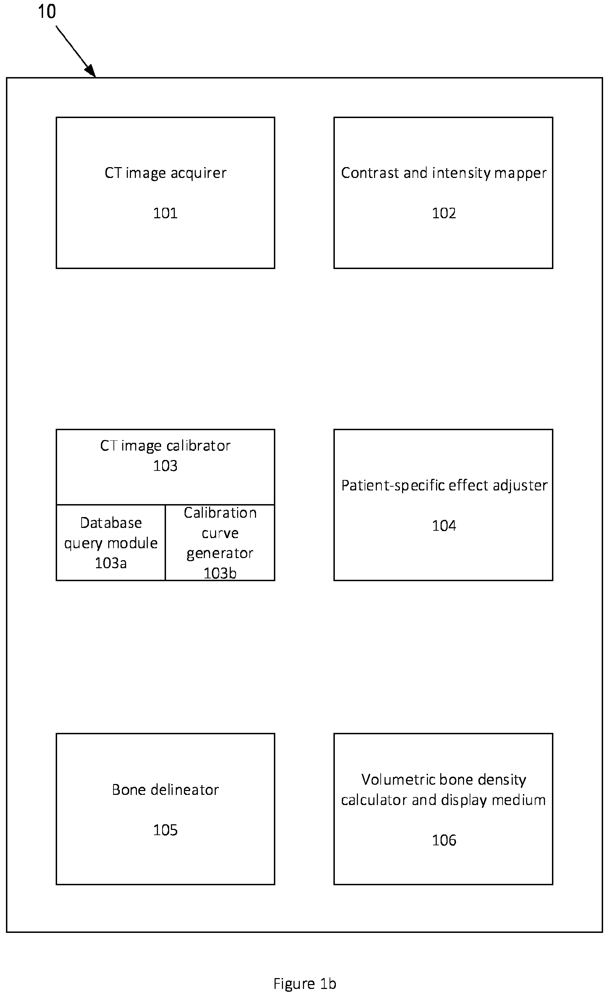

Figure 1b shows a block diagram illustrating a modular composition of the computing system 10 for determining a BMD of a patient according to example implementations as described herein.

The method, as described herein, may aid in the enhancing of the measurement of volumetric bone density and/or BMD using computer tomography (CT) scans.

The computing system 10 may comprise a CT image acquirer 101, a contrast and intensity mapper 102, a CT image calibrator 103, a patient-specific effect adjuster 104, a bone delineator 105, and a volumetric bone density calculator and display medium 106. These elements will be described in further detail below. The skilled person will understand that not all of these elements may be required in all scenarios. In some examples, some of these elements may be combined into a single element. In some examples, these elements may be coupled to one another and/or coupled to a (central) processor configured to direct, undertake and execute the features of the respective elements. In figure 1b, the computing system 10 is shown as a single entity, but the skilled person understands that the elements mentioned herein may be spread over a plurality of (e.g., hardware of software) components and/or apparatuses and/or systems, wherein each component/apparatus/system is coupled to one another via wired and/or wireless means.

The CT image acquirer 101 may be configured for obtaining a scanning image of an object to be detected by a current CT scanner. The acquirer 101 may be any suitable device for obtaining a CT scanning image. The acquirer 101 may be a large-scale static acquirer suitable for obtaining CT scanning images over a large area, or a mobile/handheld acquirer suitable for obtaining smaller scale scanning images. The CT image acquirer 101 may obtain 3D image data it processes from a connected source, which may comprise a computer network, or another communication port configured to interact with various image sources, such as imaging databases, imaging computers, or an imaging apparatus. The 3D image data received by the CT image acquirer 101 may comprise image intensities with a specific signal dynamic range. The use of a specific signal dynamic range may allow for the checking of the received 3D image data to ensure that said data is obtained from a CT scanner that adheres to the known convention of e.g. air having a HU value of -1000 HU, and water having a HU value of 0 HU. That is to say, this ensures that the obtained data is not obtained from a faulty CT scanner and/or obtained from an MRI scanner or the like and/or that the obtained image data has not been corrupted or altered.

The contrast and intensity mapper 102 utilizes, in some examples, at least a first neural network, comprised by a first AI module, to map the at least one attribute of the obtained image, preferably a CT contrast and/or a CT intensity, optionally in a tissue-specific manner, into a space of an ideal CT scanner with known system settings, for which the calibration parameters are known, thereby first addressing one of the major factors effecting the BMD measurement, such as, for example, tube voltage. The term "tissue-specific" used here may be associated with tissue delineation or tissue segmentation, as would be understood by the skilled person. When adapting domains or mapping intensities from one domain to another, the intensities can be modified across the entire image, or be focused on specific regions, provided that said specific regions can be delineated. In the present disclosure, the preferred areas for calibration and mapping may be the spine, muscles, and certain soft-tissue organs like the kidneys, although the skilled person understands that any other suitable area can be used in the presently described method. If the aforementioned areas are delineated, the intensities for only these areas can be adjusted, leaving the other organs and bone groups unchanged with respect to the remainder of the method.

In known methods, when the domains are being adapted, or the intensities are being mapped from one domain to another, the intensities of the entire image, or just a few specific regions of the images, may be altered, and not whole areas such as in the present disclosure, if they are able to be delineated. In the present disclosure, as mentioned above, the preferred areas for calibration and mapping may be the spine, muscles, and certain soft-tissue organs like the kidneys. If these areas of the obtained image are delineated, the intensities only these areas can be adjusted, while the non-delineated areas are not adjusted.

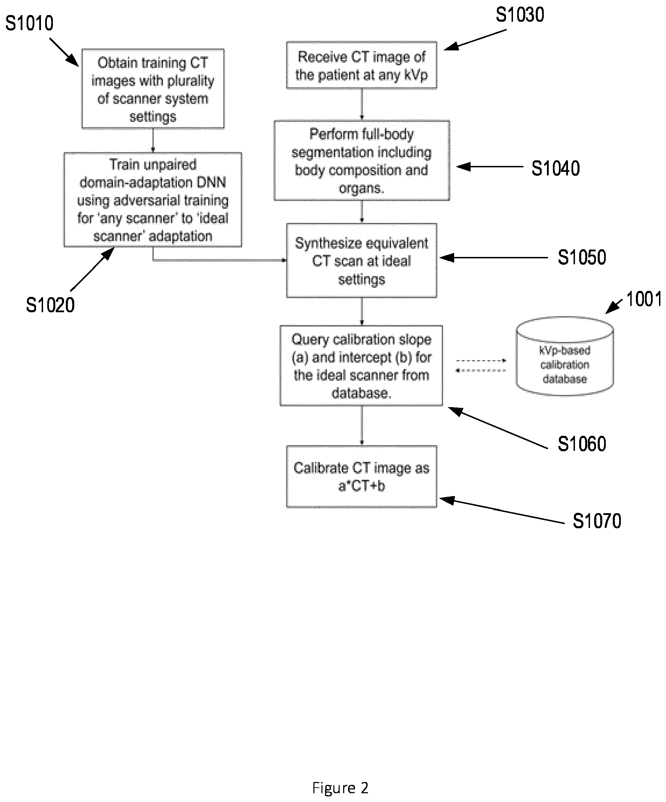

The contrast and intensity mapper 102 may employ deep learning techniques, specifically multi-to-one domain adaptation, to map CT scans from various scanners, acquisition parameters, such as, for example, tube current and reconstruction algorithms, and kVp settings to a CT scan of a fixed setting, including a specific kVp setting. The latter is referred to as the "ideal" CT scan/scanner. In particular, the ideal CT scanner may by a mono-energetic scanner, or a dual-energy scanner. A duel-energy scanner may, in some examples, output one or more mono-energetic images. In some examples, the ideal scanner is a multi-detector scanner with a tube voltage of 120 kVp scanned at a standardized table height which places the patient at an iso-center of the ideal scanner. In some examples, the ideal scanner uses a soft-tissue kernel. In some examples, a tube voltage of the ideal scanner is 80 kVp, or 120 kVp, although the skilled person understands that any other suitable tube voltage may be used for the ideal scanner. This is described in more detail in figure 2 and its associated description below.

In one embodiment, the contrast and intensity mapper 102 utilizes Generative Adversarial Networks (GANs) for domain adaptation. GANs may consist of two main components: a generator network and a discriminator network. The generator network learns to transform CT scans from different domains (source domains) into ideal CT scans of the fixed setting (target domain), while the discriminator network learns to distinguish between the transformed CT scans and ideal CT scans from the target domain. The generator network can be based on architectures such as, for example, the U-Net or any other suitable architecture. The discriminator network can be a convolutional neural network (CNN) designed to classify whether an input CT scan belongs to the target domain or is a transformed scan from a source domain. The skilled person understands that other types of neural network may be used for the discriminator network.

Additionally or alternatively, the contrast and intensity mapper 102 may employ denoising diffusion models for domain adaptation. Such diffusion models may be probabilistic generative models that iteratively refine a noisy input image by learning a denoising process. The mapper 102 can use a diffusion model to progressively transform CT scans from source domains into CT scans of the target domain. This transformation may be based on a diffusion model which itself may be based on Markov-chaining of latent variables, where each "time step" may refer to a noisier version of the previous step, starting from the original image. The model can be based on the goal to learn the reverse of this process, that is denoise it step by step resulting in the "progressive" transformation. The diffusion model can additionally or alternatively be based on, for example, U-Net architectures using Denoising Diffusion Probabilistic Models (DDPM).

Additionally or alternatively, the domain adaptation process in the contrast and intensity mapper 102 may be conditioned on full-body segmentation, including body composition and multi-organ segmentation. This conditioning may allow the mapper 102 to consider the specific anatomical context of each voxel in the CT scan, leading to more accurate and context-aware domain adaptation. The mapper 102 can utilize a separate segmentation network, such as, for example, a U-Net or a DeepLab, to generate the full-body segmentation mask, which is then used as additional input to the generator network in the GAN or the diffusion model.

To further improve the performance of the domain adaptation process, the contrast and intensity mapper 102 may incorporate specific techniques such as cycle consistency, adversarial training, and perceptual loss functions.

The CT image calibrator 103 may calibrate the CT image using a linear calibration curve with the known calibration slope and intercept of the ideal scanner. The calibrator 103 may comprise a database query module 103a and/or a calibration curve generator 103b.

The database query module 103a may interact with a calibration database to retrieve the appropriate calibration parameters for the ideal CT scanner. If available, the query module may also retrieve the calibration parameters based on, for example, the scanner model and/or acquisition parameters and/or and kVp setting. Error checks may be performed to ensure the accuracy and integrity of the retrieved parameters, such as verifying consistency with the mapped CT image and validating against predefined acceptable ranges.

The calibration curve generator 103b may generate a linear calibration curve using the retrieved slope and intercept values. The CT image calibrator 103 may apply this curve to the CT image, converting the CT intensities into calibrated BMD values. The conversion may be based on the equation BMD = slope*HU + intercept. In a 120 kVp CT scanner, for example, the slope value in the equation may be 0.71.

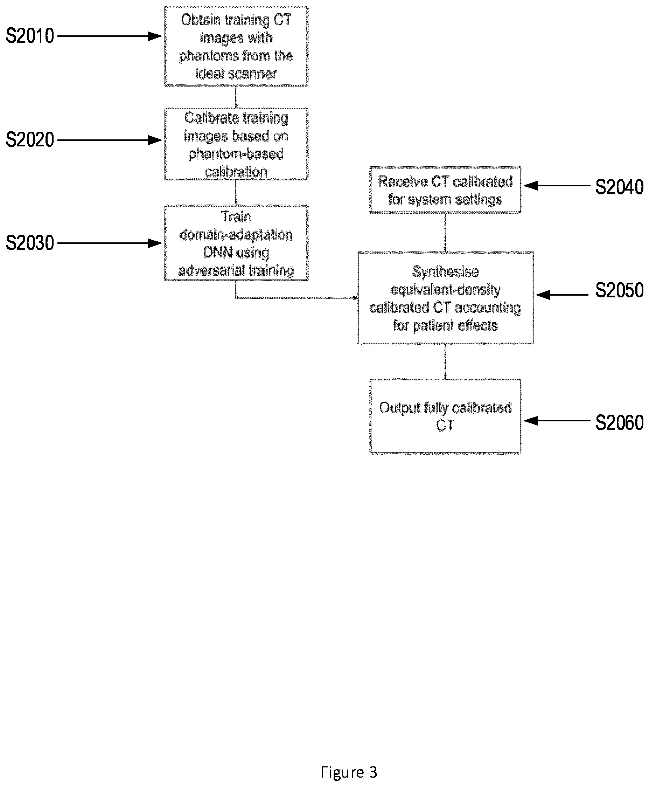

The patient-specific effect adjuster 104 may input the system-calibrated CT to a second neural network comprised by a second AI module, trained to adjust the calibrated bone mineral density, BMD, of the image to remove patient-specific effects such as beam hardening, table height, patient habitus. This training is described in more detail in relation to Figure 3 below.

The patient-specific effect adjuster 104 may be designed to further refine the calibrated CT image by removing patient-specific effects, such as beam hardening artifacts, through a secondary domain adaptation step. This process may map the calibrated CT image from the BMD space back to the BMD space while adjusting eliminate residual BMD errors by making use of the local and global context of the image. The terms "local" and "global" used here may relate to real-world factors. For example, in an image, local changes in intensity can occur due to global parameters. If the patient is obese, the CT beam experiences more attenuation, which results in lower CT intensity for the bone within the imaged region. In other words, the CT intensity within a local region of interest (ROI) within the vertebra appears to be lower due to the global characteristics of the patient. A similar situation arises with table height: if the same patient is scanned twice with the table at different heights, the CT intensity of the, for example, spine will vary. Resultantly, the patient-specific effect adjuster 104 may be configured to take these effects into account when refining the calibrated CT image. Like the contrast and intensity mapper 102, the patient-specific effect adjuster 104 may perform domain adaptation, but with the advantage of paired images, making the task relatively easier, thereby reducing computational complexity.

The patient-specific effect adjuster 104 may, in some examples, leverage paired CT scans with an external phantom and corresponding calibrated scans (with the phantom cropped out) as a ground truth, enabling more accurate domain adaptation from the calibrated CT space (or BMD space) to the final calibrated CT space.

In one embodiment, the patient-specific effect adjuster 104 may employ a deep neural network as part of the second AI module that considers both local and global contexts in its architecture. The skilled person understands that any suitable neural network method may be used, however. This allows the network to effectively capture and remove patient-specific effects while preserving the essential details of the calibrated CT image. This may be implemented through dilated convolutions and/or multi-scale feature aggregation. In addition, or as an alternative, to the above definition of "local" and "global", the term local and global "context" used here may refer to the region of the image the second AI model can process/processes. As mere examples, this may be defined, in the context of the second AI module, as the following: (1) CNNs: Small kernels in CNN layers may focus on local patterns in the calibrated CT image, such as, for example, edges, textures, and shapes. (2) Deeper layers of CNNs may capture broader, more abstract features, which can represent a more global context. (3) Dilated convolutions (or atrous convolutions) may modify CNNs by expanding the receptive field to integrate the global and local contexts. (4) Attention mechanisms may allow the model to focus on relevant parts of the input by weighing the importance of different image regions. (5) Multi-scale architectures may process the calibrated CT image at different resolutions to capture both fine-grained local details and broader global features.

Additionally or alternatively, the patient-specific effect adjuster 104 may utilize segmentation masks of important organs to guide the domain adaptation process towards better removal of beam hardening effects. These organs may include, but are not limited to, the liver, kidneys, spleen, lungs, and spine, as their presence and properties can significantly influence the beam hardening artifacts in the CT scanning image. By incorporating the segmentation masks, the patient-specific effect adjuster 104 can better focus on the relevant anatomical regions and more effectively remove patient-specific effects as well as image features such as the presence of a radiocontrast agent, resulting in a more accurate calibrated CT image.

Additionally or alternatively, the patient-specific effect adjuster 104 may incorporate a foreign-material detection module that automatically identifies and flags foreign materials, such as screws or other metal implants, which can significantly influence adjacent BMD measurements. Upon detecting metal artifacts, the patient-specific effect adjuster 104 may apply appropriate correction techniques to minimize their impact on the BMD measurements. These correction techniques can include, but are not limited to, interpolation from adjacent non-affected regions, metal artifact reduction algorithms, or adjusting the segmentation masks to exclude the affected areas.

The bone delineator 105 may delineate the cancellous bone region as an exemplary region of interest within the calibrated CT image. The skilled person will understand that other bone regions can be delineated in addition, or as an alternative, to the cancellous bone region. For example, at least one of the vertebral body, vertebral arch, spinous process, left transverse process, right transverse process, left superior articular process, right superior articular process, left inferior articular process, right inferior articular process, cortex of the vertebral body, or trabecular compartment of the vertebral body may be delineated.

The bone delineator 105 may effectively process the calibrated and refined CT image to delineate the regions of interest for bone mineral density measurements. The bone delineator 105 may be a modified U-Net segmentation model designed to accurately segment various subregions within the one or more vertebrae within the calibrated and refined CT image, including the trabecular bone and/or cortical bone, as would be understood by the skilled person. It may incorporate several enhancements to improve its segmentation performance. These enhancements may include, but are not limited to, the use of dilated convolutions, attention mechanisms, or deeper supervision.

The volumetric bone density calculator and display medium 106 may determine the volumetric bone density of the delineated cancellous bone region and may, in some examples, display it in a user-friendly manner.

The volumetric bone density calculator and display medium 106 may be responsible for computing the mean BMD in the trabecular region of each vertebra within the obtained scanning image (with outlier vertebrae and/or vertebrae with abnormalities being excluded) and may present the results in an intuitive and informative manner. This enables clinicians to easily assess BMD values at each vertebra location, facilitating better diagnosis and treatment planning.

Upon receiving the segmented trabecular bone regions from the bone delineator 105, the volumetric bone density calculator 106 may compute the mean BMD for each region. The calculator 106 may also perform additional analyses, such as calculating other relevant statistical metrics (e.g., standard deviation, coefficient of variation) or comparing the BMD values to reference ranges based on the patient's age, sex, and other factors.

For example, the BMD of the i-th vertebra of the adjusted image may be computed using the following equation: ${BMD}_{i} = \frac{1}{{M}_{i}} {\sum }_{j = 1}^{{M}_{i}} {v}_{ij}$ where Mᵢ is the total number of voxels within the trabecular region of the i-th vertebra, and vᵢⱼ is the CT intensity, or BMD value, of the j-th voxel within the trabecular region of the i-th vertebra.

Resultantly, the mean BMD of the trabecular region of all of the vertebrae, excluding anomalous vertebrae, can be calculated using the following equation: $Mean BMD = \frac{{\sum }_{i = 1}^{N} {BMD}_{i} ⋅ {1}_{\left\{i∉A\right\}}}{{\sum }_{i = 1}^{N} {1}_{\left\{i∉A\right\}}}$ where N is the total number of vertebrae for which the mean BMD is to be calculated in the adjusted image, BMDᵢ is the BMD in the trabecular region of the i-th vertebra computed by the first equation above, 1_{{*i*∉*A*}} is an indicator function that equals 1 if the i-th vertebra is not anomalous, and 0 if it is anomalous, and A is the set of anomalous vertebrae, wherein said vertebra(e) may comprise a fracture, a foreign material, a severe degeneration, a tumor or the like.

The display medium 106 may present the computed BMD values and any additional analyses in a user-friendly format. This may include visualizing the BMD values as a color-coded overlay on the segmented vertebrae, generating a table or chart summarizing the BMD values for each vertebra, or providing a graphical representation of the BMD distribution along the spine, or any other suitable display option.

The above described computing system 10, and method undertaken by the computing system 10, may eliminate the need for an external calibration phantom and the requirement to define and delineate an internal reference tissue, providing a more accurate and efficient measurement of volumetric bone density based on the entirety of the CT image as well as the local manifestations.

Figure 2 shows a flow chart of training a first AI module, mapping at least one attribute of the obtained scanning image and calibrating the mapped image according to example implementations as described herein.

Figure 2 shows a neural network based method of the contrast and intensity mapper 102 and the CT image calibrator 103 and, more specifically, shows a (system-specific) calibration method using a neural network for synthesizing an "ideal" CT image for any given CT image. This synthesized CT is eventually calibrated.

In the left branch of the flow chart, the training phase of a neural network of the first AI model is shown. A plurality of CT images is obtained in step S1010 as a training data set to train the neural network. These images may comprise (or, more specifically, may have been acquired using) different scanner settings from one or more CT image acquirers 101 and/or CT scanners. As mere examples, these settings may comprise one or more of a) a model of the CT scanner/acquirer 101; b) a parameter of acquisition of the image data; and c) a kilovoltage peak (kVp) setting of the CT scan/acquired image. The skilled person will understand that the more images are used, the more intensive the training and so, the more accurate the result in the subsequent inference phase of the first AI module. In the shown example, the neural network is a Deep Neural Network (DNN) which is trained in step S1020 to function as an unpaired domain adaptation DNN using, for example, adversarial training for the "any scanner" to "ideal scanner" adaptation based on the plurality of CT images forming the training data set. With respect to the definition of the term "domain adaptation" given above, the first AI module may thus use an unpaired approach for training and subsequent inference.

In some examples, the training of the first AI module may more specifically be performed as follows. The training may be based on a dataset of a plurality of CT scans, such as 40,000 CT scans, for example. A subset of these scans may be acquired using the ideal scanner as described herein (referred to as dataset-A), while the remainder are captured using a diverse set of CT scanners different from the ideal scanner (referred to as dataset-B) which comprise at least one parameter which is not the same as the corresponding parameter of the ideal scanner. The dataset can additionally or alternatively be categorized based on the presence of a phantom in the scan, which may be used for calibration purposes. This categorization may overlap with the scanner types: some scans in dataset-A may contain phantoms, while others may not, and the same may apply to dataset-B. These subsets are denoted as dataset-A-P (dataset-A with a phantom) and dataset-A-noP (dataset-A without a phantom). Similarly, dataset-B may be divided into dataset-B-P and dataset-B-noP.

The goal of the first AI module is to standardize all scans to match those produced by the ideal scanner. In this case, dataset-A serves as the "target domain" (or "output") and dataset-B as the "source domain" (or "input"). During training, the first AI module is trained and learns to map any scan from the source domain (e.g., a previously unseen scan from dataset-B) to the target domain (dataset-A), thereby simulating the output of an ideal scanner. This process may, in one example, be fully unsupervised and utilize one or more of the following exemplary loss functions:
- Adversarial loss, which encourages the model to generate images that closely resemble those from the target domain;
- Cycle consistency loss, which ensures that the mapping between domains is reversible;
- Perceptual loss, which preserves the semantic content and fine details of the image during translation; and
- Additional losses such as, for example, feature alignment and task-specific losses can further refine the model's performance.

The output of the first AI model may be a CT scanning image as if it were taken and/or obtained by the ideal CT scanner described herein.

Meanwhile, in the central branch of the flow chart, the contrast and intensity mapper 102 receives in step S1030 the CT image of the patient, wherein, in this example, the kVp may be any suitable kVp for taking such an image. The mapper 102 then performs in step S1040 a full-body segmentation including body composition and organs. As mentioned herein, this conditioning may allow the mapper 102 to take into account the specific anatomical context of each voxel in the CT scan, leading to more accurate and context-aware domain adaptation.

The trained DNN then uses the full-body segmented image to synthesize in step S1050 the equivalent of the received CT scan at the "ideal scanner" settings. That is to say, if the received CT image was taken at 100 kVp, for example, the DNN may shift and synthesize this image so that it appears it was taken at 120 kVp, for example. In other words, if 'x_in' is the CT image from any given kVp from any given CT scanner, and 'f' is the neural network trained for domain adaptation, i.e., the first AI model described herein, then x_out = f(x_in), where x_out belongs to the ideal scanner space. This may allow for the CT image from any scanner/acquirer 101 to be mapped onto the same domain, wherein this domain has constant parameters. This synthesizing uses the DNN which was trained in step S1020 based on the training data set shown in the left branch of figure 2. This may allow for the computing system 10 and/or method mentioned herein to be adaptable to many different CT scanners and/or acquirers 101.

This synthesized equivalent CT scan may then be passed to the CT image calibrator 103, which may comprise a database query module 103a and/or a calibration curve generator 103b.

The database query module 103a may interact (step S1060) with a calibration database 1001, in this example a kVp-based database, but it may additionally or alternatively be any other suitable database, to retrieve the appropriate calibration parameters for the ideal scanner. Error checks may be performed to ensure the accuracy and integrity of the retrieved parameters, such as verifying consistency with the mapped CT image, generated by the synthesizing step S1050, and validating against predefined acceptable ranges.

The calibration curve generator 103b may generate a linear calibration curve using the retrieved slope and intercept values. The CT image calibrator 103 may apply this curve to the CT image, transforming in step S1070 the CT intensities into calibrated BMD values, as shown in the box of step S1070 in the flow chart of figure 2.

Figure 3 shows a flow chart of training a second AI module and adjusting a BMD of the mapped image according to example implementations as described herein.

Figure 3 shows a neural network based method of the patient-specific effect adjuster 104. In particular, it shows the second stage of calibration for adjusting the patient-specific effects such as beam-hardening and patient habitus incorporating paired domain adaptation within BMD space.

In the left branch of the flow chart, the training phase of a neural network of the second AI module is shown. A plurality of images for training are obtained in step S2010 as a training data set, wherein these images may comprise images from one or more CT scanners/acquirers 101, wherein the images have different characteristics. These characteristics may comprise one or more of a beam hardening artefact; an organ of the patient; and a position of the patient within the CT scanner. Furthermore, the training images obtained in step S2010 comprise, in this example, phantoms from the ideal scanner mentioned above in relation to figure 2, although the skilled person understands that the use of phantoms is optional. These external phantoms help enabling a more accurate domain adaptation from the converted CT space (or BMD space) to the final calibrated CT space. Such Bone Density Calibration Phantoms are known to the skilled person and may comprise, for example, one or more calibrated rods comprising calcium hydroxyapatite with a given cm³ concentration within the one or more rods such as, for example, 0 mg/cm³, 100 mg/cm³ or 200 mg/cm³ of calcium hydroxyapatite within said rod(s). The adjuster 104 may then calibrate, in step S2020, the training images based on the phantom-based calibration. In the shown example, the neural network is a Deep Neural Network (DNN), which is trained in step S2030, to function as a paired domain-adaptation DNN using adversarial training. With respect to the definition of the term "domain adaptation" given above, the second AI module may thus use a paired approach for training and subsequent inference.

In some examples, the training of the second AI module may more specifically be performed as follows. The training dataset-A, dataset-A-P, dataset-A-noP, dataset-B, dataset-B-P and dataset-B-noP may be defined in the same manner as described above for the exemplary training of the first AI module.

For preparing the dataset for the second AI module, converting scans into the BMD space is focused on. This process may begin with dataset-A-P, the subset of ideal scans containing phantoms. Since phantoms enable accurate calibration, these scans can be converted into the BMD space, resulting in a new dataset called dataset-A-Pbmd. Once the conversion is complete, the phantom from both the original and BMD-converted scans may be cropped out. At this stage, data selection may be performed, wherein each scan in dataset-A-P may be converted to the BMD space using internal tissue references. Only those scans where the phantom-based BMD matches the internal-tissue-based BMD may be retained, ensuring high-quality calibration.

Using these "paired" datasets (dataset-A-P as the source and dataset-A-Pbmd as the target), the second AI module may then be trained. Unlike the first AI module, both supervised and unsupervised losses may be leveraged in this training process. In addition to adversarial, cycle consistency, and perceptual losses, one or more of the following exemplary loss functions may also be used:
- Voxel-wise reconstruction loss, for example an L1 loss function (Least Absolute Deviations) and/or an L2 loss function (Least Square Errors), which ensures pixel-level accuracy;
- Landmark correspondence loss, which ensures spatial consistency between key anatomical features; and
- Feature matching loss, which preserves high-level structural information across domains.

In some examples of the second AI module, dataset-B-P (diverse scanners with phantoms) could additionally or alternatively be used. Once the first AI module is trained and operational, each scan from dataset-B-P can be mapped to the "ideal" domain (i.e., convert it to resemble dataset-A scans). After this domain adaptation, the same BMD data preparation steps can be applied, as described above.

The output of the second AI model is an adjusted BMD of the image mapped by the first AI module, wherein the BMD has patient-specific effects removed.

In the central branch of the flow chart, the adjuster 104 receives in step S2040 the calibrated synthesized CT image from the CT image calibrator 103 (e.g., as obtained in step S1070), and then synthesizes in step S2050 equivalent-density calibrated CT images accounting for the patient effects by using both the received image and the trained DNN from the left branch of figure 3. This is then output in step S2060 to, for example, the bone delineator 105 which undertakes the next step of the method, as described herein.

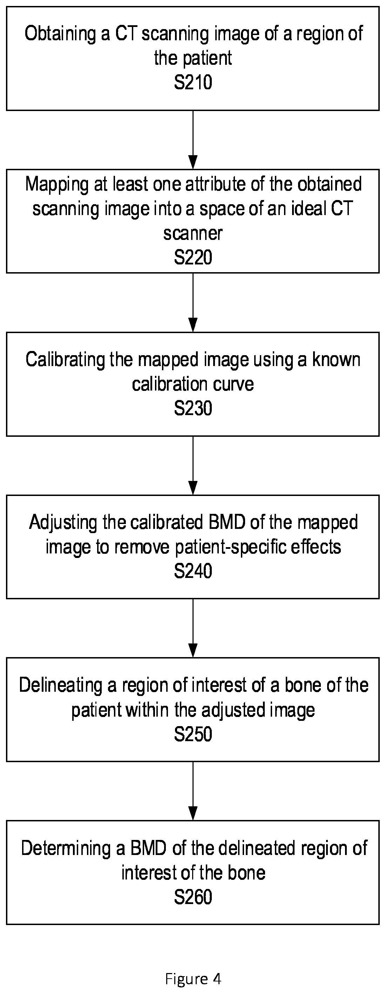

Figure 4 shows a flow chart of a method for determining a BMD of a patient according to example implementations as described herein.

In the method, the following steps are undertaken:
- a computed tomography (CT) scanning image of a region of the patient is obtained in step S210, with the scanning image acquired by a CT scanner using a first known parameter;
- at least one attribute of the obtained scanning image is mapped in step S220, by a first artificial intelligence (AI) module into a space of an ideal CT scanner with known system settings using a first domain adaptation step, wherein the ideal scanner uses a second known parameter, wherein the first known parameter and the second known parameter relate to one another;
- the mapped image is calibrated in step S230 using a known linear calibration curve based on the second known parameter;
- a BMD of the mapped image is adjusted in step S240, by a second AI module, to remove patient-specific effects using a second domain adaptation step;
- a region of interest of a bone of the patient within the adjusted image is delineated in step S250; and
- a BMD of the delineated region of interest of the bone is determined in step S260.

The steps of this method are undertaken by the respective components of the computing system 10 described above. In some examples, not all of the steps are required. Additionally or alternatively, some steps may be undertaken simultaneously.

It is believed that the advantages of the technique presented herein will be fully understood from the foregoing description, and it will be apparent that various changes may be made in the form, constructions and arrangement of the exemplary aspects thereof without departing from the scope of the invention or without sacrificing all of its advantageous effects. Because the technique presented herein can be varied in many ways, it will be recognized that the invention should be limited only by the scope of the claims that follow.

## Claims

1. A computer-implemented method for determining a bone mineral density, BMD, of a patient, the method being performed by a computing system and comprising:
obtaining (S210) a computed tomography, CT, scanning image of a region of the patient, the scanning image acquired by a CT scanner using a first known parameter, **characterised by**;
mapping (S220), by a first artificial intelligence, AI, module, at least one attribute of the obtained scanning image into a space of an ideal CT scanner with known system settings using a first domain adaptation step, wherein the ideal scanner employs a second known parameter, wherein the first known parameter and the second known parameter relate to one another;
adjusting (S240), by a second AI module, a BMD of the mapped image to remove patient-specific effects using a second domain adaptation step;
delineating (S250) a region of interest of a bone of the patient within the adjusted image; and
determining (S260) a BMD of the delineated region of interest of the bone.

2. The method of claim 1, wherein the first AI module is trained to perform the mapping (S220) based on a plurality of CT scanning images different from the obtained scanning image and their mapping of the at least one attribute into the space of the ideal CT scanner.

3. The method of claim 2, wherein the first AI module uses a Generative Adversarial Network, GAN, for the first domain adaptation step, wherein the GAN comprises:
a generator network configured to transform data of the obtained scanning image from a source domain to a target domain, wherein the source domain is a domain of the CT scanner the obtained scanning image is obtained from, and the target domain is a domain of the ideal CT scanner; and
a discriminator network configured to distinguish whether the data is transformed data, or data that originated from the target domain.

4. The method of claim 2 or 3, wherein the first AI module uses a denoising diffusion model for the first domain adaptation step, wherein the at least one attribute is configured to be progressively transformed from the source domain, comprising the first known parameter, to the target domain, comprising the second known parameter.

5. The method of any one of claims 2 to 4, wherein the first AI module uses a segmentation network for the first domain adaptation step, wherein information relating to a specific anatomical context of each voxel of the plurality of CT scanning images is determined by the segmentation network.

6. The method of any one of the preceding claims, wherein the second domain adaptation step comprises mapping the mapped image from a first domain comprising first BMD data to a second domain comprising second BMD data, wherein the second BMD data is the first BMD data without BMD residual errors
wherein, optionally, the second domain adaptation step further comprises utilizing a segmentation mask configured to segment at least one organ of the patient within the obtained scanning image from a remainder of the obtained scanning image.

7. The method of any one of the preceding claims, wherein the second AI module uses a foreign material detection module configured to detect a foreign material in the obtained image, in particular metallic material; and
wherein the second AI module applies a correction to reduce an effect of the detected foreign material on the adjusted BMD of the mapped image.

8. The method of any one of the preceding claims, wherein the determining step (S260) further comprises calculating a mean BMD in the delineated region of interest of the bone, in particular a trabecular region of one or more vertebrae, of the patient located in the obtained scanning image.

9. The method of any one of the preceding claims further comprising:
calibrating (S230) the mapped image, before the second domain adaptation step, using a known calibration curve based on the second known parameter.

10. The method of claim 9, wherein the calibration curve is a linear calibration curve which comprises a known calibration slope and intercept based on the second known parameter, wherein, optionally, the computing system uses a database query module and a calibration curve generator, wherein:
the database query module is configured to communicate with a calibration database to retrieve a relevant calibration parameter based on the second known parameter;
the calibration curve generator is configured to generate the linear calibration curve based on the retrieved calibration parameter; and
wherein the calibration step (S230) further comprises applying the linear calibration curve to the mapped image and transforming the at least one attribute, preferably at least a CT intensity of the obtained scanning image, into a calibrated BMD value.

11. The method of any one of the preceding claims, wherein the first AI module is trained based on a plurality of CT scanning images different from the obtained scanning image, wherein the plurality of CT scanning images include scans acquired using the ideal scanner as input and corresponding scans acquired using a diverse set of CT scanners different from the ideal scanner as output, wherein the first AI module is trained to output a CT scanning image as if it were obtained by the ideal CT scanner,
wherein, optionally, at least one of the following loss functions are used in the training:
- an adversarial loss function;
- a cycle consistency loss function;
- a perceptual loss function; and
- a feature alignment and task-specific loss function.

12. The method of any one of the preceding claims, wherein the second AI module is trained based on a plurality of CT scanning images different from the obtained scanning image, wherein the plurality of CT scanning images include scans containing phantoms as input and corresponding scans converted into the BMD space with patient-specific effects being removed as output, wherein the second AI module is trained to output a CT scanning image with an adjusted BMD and patient-specific effects removed,
wherein, optionally, at least one of the following loss functions are used in the training:
- an adversarial loss function;
- a cycle consistency loss function;
- a perceptual loss function;
- a voxel-wise reconstruction loss function;
- a landmark correspondence loss function; and
- a feature matching loss function.

13. A computing system (10) comprising means for carrying out the method of any one of the preceding claims.

14. A computer program product comprising instructions which, when the program is executed by a computing system (10), cause the computing system (10) to carry out the method of any one of claims 1 to 12.

15. A computer-readable medium having stored thereon the computer program product of claim 14.

## Patentansprüche

1. Computerimplementiertes Verfahren zur Bestimmung einer Knochenmineraldichte, BMD, eines Patienten, wobei das Verfahren durch ein Rechnersystem durchgeführt wird und Folgendes umfasst:
Erhalten (S210) eines Computertomographie-, CT-, Scanbildes eines Bereichs des Patienten, wobei das Scanbild durch einen CT-Scanner unter Verwendung eines ersten bekannten Parameters erfasst wurde;
**gekennzeichnet durch**:
Abbilden (S220), durch ein erstes Modul für künstliche Intelligenz, KI, mindestens eines Attributs des erhaltenen Scanbildes in einen Raum eines idealen CT-Scanners mit bekannten Systemeinstellungen unter Verwendung eines ersten Domänenadaptionsschritts, wobei der ideale Scanner einen zweiten bekannten Parameter einsetzt, wobei der erste bekannte Parameter und der zweite bekannte Parameter miteinander in Beziehung stehen;
Anpassen (S240), durch ein zweites KI-Modul, einer BMD des abgebildeten Bildes, um patientenspezifische Effekte unter Verwendung eines zweiten Domänenadaptionsschritts zu entfernen;
Abgrenzen (S250) eines Bereichs von Interesse eines Knochens des Patienten innerhalb des angepassten Bildes; und
Bestimmen (S260) einer BMD des abgegrenzten Bereichs von Interesse des Knochens.

2. Verfahren nach Anspruch 1, wobei das erste KI-Modul darauf trainiert ist, das Abbilden (S220) basierend auf einer Mehrzahl von CT-Scanbildern, die sich von dem erhaltenen Scanbild unterscheiden, und deren Abbildung des mindestens einen Attributs in den Raum des idealen CT-Scanners durchzuführen.

3. Verfahren nach Anspruch 2, wobei das erste KI-Modul ein generatives adversarielles Netzwerk, GAN, für den ersten Domänenadaptionsschritt verwendet, wobei das GAN Folgendes umfasst:
ein Generatornetzwerk, das dazu eingerichtet ist, Daten des erhaltenen Scanbildes von einer Quelldomäne in eine Zieldomäne zu transformieren, wobei die Quelldomäne eine Domäne des CT-Scanners ist, von dem das erfasste Scanbild erhalten wurde, und die Zieldomäne eine Domäne des idealen CT-Scanners ist; und
ein Diskriminatornetzwerk, das dazu eingerichtet ist, zu unterscheiden, ob es sich bei den Daten um transformierte Daten oder um Daten handelt, die aus der Zieldomäne stammen.

4. Verfahren nach Anspruch 2 oder 3, wobei das erste KI-Modul ein entrauschendes Diffusionsmodell für den ersten Domänenadaptionsschritt verwendet, wobei das mindestens eine Attribut dazu eingerichtet ist, schrittweise von der Quelldomäne, die den ersten bekannten Parameter umfasst, in die Zieldomäne, die den zweiten bekannten Parameter umfasst, transformiert zu werden.

5. Verfahren nach einem der Ansprüche 2 bis 4, wobei das erste KI-Modul ein Segmentierungsnetzwerk für den ersten Domänenadaptionsschritt verwendet, wobei Informationen bezüglich eines spezifischen anatomischen Kontextes jedes Voxels der Mehrzahl von CT-Scanbildern durch das Segmentierungsnetzwerk bestimmt werden.

6. Verfahren nach einem der vorhergehenden Ansprüche, wobei der zweite Domänenadaptionsschritt ein Abbilden des abgebildeten Bildes von einer ersten Domäne, die erste BMD-Daten umfasst, in eine zweite Domäne, die zweite BMD-Daten umfasst, umfasst, wobei die zweiten BMD-Daten die ersten BMD-Daten ohne BMD-Restfehler sind,
wobei, optional, der zweite Domänenadaptionsschritt ferner ein Verwenden einer Segmentierungsmaske umfasst, die dazu eingerichtet ist, mindestens ein Organ des Patienten innerhalb des erhaltenen Scanbildes von einem Rest des erhaltenen Scanbildes zu segmentieren.

7. Verfahren nach einem der vorhergehenden Ansprüche, wobei das zweite KI-Modul ein Fremdmaterial-Erkennungsmodul verwendet, das dazu eingerichtet ist, ein Fremdmaterial in dem erhaltenen Bild zu erkennen, insbesondere ein metallisches Material; und
wobei das zweite KI-Modul eine Korrektur anwendet, um einen Effekt des erkannten Fremdmaterials auf die angepasste BMD des abgebildeten Bildes zu verringern.

8. Verfahren nach einem der vorhergehenden Ansprüche, wobei der Bestimmungsschritt (S260) ferner ein Berechnen einer mittleren BMD in dem abgegrenzten Bereich von Interesse des Knochens, insbesondere einem trabekulären Bereich eines oder mehrerer Wirbel, des Patienten, der in dem erhaltenen Scanbild angeordnet ist, umfasst.

9. Verfahren nach einem der vorhergehenden Ansprüche, ferner umfassend:
Kalibrieren (S230) des abgebildeten Bildes, vor dem zweiten Domänenadaptionsschritt, unter Verwendung einer bekannten Kalibrierungskurve basierend auf dem zweiten bekannten Parameter.

10. Verfahren nach Anspruch 9, wobei die Kalibrierungskurve eine lineare Kalibrierungskurve ist, die eine bekannte Kalibrierungssteigung und einen bekannten Achsenabschnitt basierend auf dem zweiten bekannten Parameter umfasst, wobei das Rechnersystem optional ein Datenbankabfragemodul und einen Kalibrierungskurvengenerator verwendet, wobei:
das Datenbankabfragemodul dazu eingerichtet ist, mit einer Kalibrierungsdatenbank zu kommunizieren, um einen relevanten Kalibrierungsparameter basierend auf dem zweiten bekannten Parameter abzurufen;
der Kalibrierungskurvengenerator dazu eingerichtet ist, die lineare Kalibrierungskurve basierend auf dem abgerufenen Kalibrierungsparameter zu erzeugen; und
wobei der Kalibrierungsschritt (S230) ferner ein Anwenden der linearen Kalibrierungskurve auf das abgebildete Bild und ein Transformieren des mindestens einen Attributs, vorzugsweise mindestens einer CT-Intensität des erhaltenen Scanbildes, in einen kalibrierten BMD-Wert umfasst.

11. Verfahren nach einem der vorhergehenden Ansprüche, wobei das erste KI-Modul basierend auf einer Mehrzahl von CT-Scanbildern trainiert wird, die sich von dem erhaltenen Scanbild unterscheiden, wobei die Mehrzahl von CT-Scanbildern Scans als Eingabe umfasst, die unter Verwendung des idealen Scanners erfasst wurden, und entsprechende Scans als Ausgabe umfasst, die unter Verwendung einer vielfältigen Gruppe von CT-Scannern erfasst wurden, die sich vom idealen Scanner unterscheiden, wobei das erste KI-Modul so trainiert wird, dass es ein CT-Scanbild ausgibt, als wäre es vom idealen CT-Scanner erhalten worden,
wobei optional mindestens eine der folgenden Verlustfunktionen beim Training verwendet wird:
- eine adversarielle Verlustfunktion;
- eine Zykluskonsistenzverlustfunktion;
- eine Wahrnehmungsverlustfunktion; und
- eine Merkmalsausrichtungs- und aufgabenspezifische Verlustfunktion.

12. Verfahren nach einem der vorhergehenden Ansprüche, wobei das zweite KI-Modul basierend auf einer Mehrzahl von CT-Scanbildern trainiert wird, die sich von dem erhaltenen Scanbild unterscheiden, wobei die Mehrzahl von CT-Scanbildern Scans mit Phantomen als Eingabe und entsprechende in den BMD-Raum konvertierte Scans als Ausgabe umfasst, bei denen patientenspezifische Effekte entfernt wurden, wobei das zweite KI-Modul so trainiert wird, dass es ein CT-Scanbild mit einer angepassten BMD und entfernten patientenspezifischen Effekten ausgibt,
wobei optional mindestens eine der folgenden Verlustfunktionen beim Training verwendet wird:
- eine adversarielle Verlustfunktion;
- eine Zykluskonsistenzverlustfunktion;
- eine Wahrnehmungsverlustfunktion;
- eine voxelweise Rekonstruktionsverlustfunktion;
- eine Landmarkenkorrespondenzverlustfunktion; und
- eine Merkmalsabstimmungsverlustfunktion.

13. Rechnersystem (10), umfassend Mittel zur Durchführung des Verfahrens nach einem der vorhergehenden Ansprüche.

14. Computerprogrammprodukt, das Anweisungen umfasst, die, wenn das Programm von einem Rechnersystem (10) ausgeführt wird, das Rechnersystem (10) veranlassen, das Verfahren nach einem der Ansprüche 1 bis 12 durchzuführen.

15. Computerlesbares Medium, auf dem das Computerprogrammprodukt nach Anspruch 14 gespeichert ist.

## Revendications

1. Procédé mis en œuvre par ordinateur pour déterminer une densité minérale osseuse, DMO, d'un patient, le procédé étant mis en œuvre par un système informatique et comprenant:
l'obtention (S210) d'une image de tomodensitométrie, TDM, d'une zone du patient, l'image de balayage étant acquise par un scanner TDM à l'aide d'un premier paramètre connu, **caractérisée par**:
le mappage (S220), par un premier module d'intelligence artificielle, IA, d'au moins un attribut de l'image de balayage obtenue dans l'espace d'un scanner TDM idéal dont les paramètres système sont connus, à l'aide d'une première étape d'adaptation de domaine, le scanner idéal utilisant un deuxième paramètre connu, le premier paramètre connu et le deuxième paramètre connu étant liés l'un à l'autre;
l'ajustement (S240), à l'aide d'un deuxième module d'IA, une DMO de l'image mappée afin d'éliminer les effets spécifiques au patient à l'aide d'une deuxième étape d'adaptation de domaine;
la délinéation (S250) d'une zone d'intérêt d'un os du patient dans l'image ajustée; et
la détermination (S260) d'une DMO de la zone d'intérêt délinéée de l'os.

2. Procédé selon la revendication 1, dans lequel le premier module d'IA est entraîné à effectuer le mappage (S220) sur la base d'une pluralité d'images de tomodensitométrie, TDM, différentes de l'image de balayage obtenue et de leur mappage de l'au moins un attribut dans l'espace du scanner TDM idéal.

3. Procédé selon la revendication 2, dans lequel le premier module d'IA utilise un réseau antagoniste génératif, GAN, pour la première étape d'adaptation de domaine, le GAN comprenant:
un réseau générateur configuré pour transformer les données de l'image de balayage obtenue d'un domaine source vers le domaine cible, le domaine source étant le domaine du scanner TDM à partir duquel provient l'image de balayage obtenue, et le domaine cible étant le domaine du scanner TDM idéal; et
un réseau discriminateur configuré pour déterminer si les données sont des données transformées ou des données provenant du domaine cible.

4. Procédé selon la revendication 2 ou 3, dans lequel Le premier module d'IA utilise un modèle de diffusion de débruitage pour la première étape d'adaptation de domaine, l'au moins un attribut est configuré pour être progressivement transformé du domaine source, comprenant le premier paramètre connu, vers le domaine cible, comprenant le deuxième paramètre connu.

5. Procédé selon l'une quelconque des revendications 2 à 4, dans lequel le premier module d'IA utilise un réseau de segmentation pour la première étape d'adaptation de domaine, dans lequel les informations relatives au contexte anatomique spécifique de chaque voxel de la pluralité des images de tomodensitométrie, TDM, sont déterminées par le réseau de segmentation.

6. Procédé selon l'une quelconque des revendications précédentes, dans lequel la deuxième étape d'adaptation de domaine comprend le mappage de l'image mappée provenant d'un premier domaine comprenant des premières données DMO avec un deuxième domaine comprenant des deuxièmes données DMO, les deuxièmes données BMD étant les premières données DMO sans les erreurs résiduelles DMO
dans lequel, éventuellement, la deuxième étape d'adaptation de domaine comprend en outre l'utilisation d'un masque de segmentation configuré pour segmenter au moins un organe du patient dans l'image de balayage obtenue, par rapport au reste de l'image de balayage obtenue.

7. Procédé selon l'une quelconque des revendications précédentes, dans lequel le deuxième module d'IA utilise un module de détection de corps étrangers conçu pour détecter un corps étranger dans l'image obtenue, en particulier un corps métallique; et
dans lequel le deuxième module d'IA applique une correction afin de réduire l'effet du corps étranger détecté sur la DMO de l'image mappée.

8. Procédé selon l'une quelconque des revendications précédentes, dans lequel l'étape de détermination (S260) comprend en outre le calcul d'une DMO moyenne dans la région d'intérêt délinéée de l'os, en particulier une région trabéculaire d'une ou plusieurs vertèbres, du patient figurant sur l'image de balayage obtenue.

9. Procédé selon l'une quelconque des revendications précédentes, comprenant en outre:
l'étalonnage (S230) de l'image mappée, avant la deuxième étape d'adaptation de domaine, à l'aide d'une courbe d'étalonnage connue basée sur le deuxième paramètre connu.

10. Procédé selon la revendication 9, dans lequel la courbe d'étalonnage est une courbe d'étalonnage linéaire qui comporte une pente d'étalonnage et l'ordonnée à l'origine connus, sur la base du deuxième paramètre connu, le système informatique utilisant, éventuellement, un module d'interrogation de base de données et un générateur de courbes d'étalonnage, dans lequel:
le module d'interrogation de base de données est configuré pour communiquer avec une base de données d'étalonnage afin de récupérer un paramètre d'étalonnage pertinent en fonction du deuxième paramètre connu;
le générateur de courbe d'étalonnage est configuré pour générer la courbe d'étalonnage linéaire sur la base du paramètre d'étalonnage récupéré; et
dans lequel l'étape d'étalonnage (S230) comprend en outre l'application de la courbe d'étalonnage linéaire à l'image mappée et la transformation de l'au moins un attribut, de préférence au moins une intensité TDM de l'image de balayage obtenue, en une valeur DMO étalonnée.

11. Procédé selon l'une quelconque des revendications précédentes, dans lequel le premier module d'IA est entraîné sur la base d'une pluralité d'images de tomodensitométrie, TDM, différentes de l'image obtenue, la pluralité des images de tomodensitométrie, TDM, comprenant, en entrée, des images acquises à l'aide du scanner idéal et, en sortie, les images correspondantes acquises à l'aide d'un ensemble varié de scanners TDM différents du scanner idéal; le premier module d'IA est entraîné à produire une image de tomodensitométrie, TDM, comme si elle avait été obtenue par le scanner de tomodensitométrie, TDM, idéal,
dans lequel, éventuellement, au moins l'une des fonctions de perte suivantes est utilisée lors de l'entraînement:
- une fonction de perte antagoniste;
- une fonction de perte de cohérence cyclique;
- une fonction de perte perceptuelle; et
- un alignement des caractéristiques et une fonction de perte spécifique à la tâche.

12. Procédé selon l'une quelconque des revendications précédentes, dans lequel le deuxième module d'IA est entraîné sur la base d'une pluralité d'images de tomodensitométrie, TDM, différentes de l'image obtenue, la pluralité des images de tomodensitométrie, TDM, comprenant, en entrée, des images contenant des fantômes et, en sortie, les images correspondantes converties dans l'espace DMO après suppression des effets spécifiques au patient; le deuxième module d'IA est entraîné pour produire une image de tomodensitométrie, TDM, dont la DMO a été ajustée et dont les effets spécifiques au patient ont été supprimés,
dans lequel, éventuellement, au moins l'une des fonctions de perte suivantes est utilisée lors de l'entraînement:
- une fonction de perte antagoniste;
- une fonction de perte de cohérence cyclique;
- une fonction de perte perceptuelle;
- une fonction de perte de reconstruction au niveau des voxels;
- une fonction de perte de correspondance de référence; et
- une fonction de perte de mappage des caractéristiques.

13. Système informatique (10) comprenant un support permettant de mettre en œuvre le procédé selon l'une quelconque des revendications précédentes.

14. Produit programme informatique comprenant des instructions qui, lorsque le programme est exécuté par un système informatique (10), amènent le système informatique (10) à mettre en œuvre le procédé selon l'une quelconque des revendications 1 à 12.

15. Support lisible par ordinateur sur lequel est stocké le produit programme informatique selon la revendication 14.
